# EUROPÄISCHE PATENTSCHRIFT

(11) **EP 0 474 587 B1**
(45) Veröffentlichungstag und Bekanntmachung des Hinweises auf die Patenterteilung: **19.01.2000**
(21) Anmeldenummer: 91810571.9
(22) Anmeldetag: 15.07.1991
(51) Int. Cl.: B32B 15/08, B65D 65/40

(54) **Streckgezogene Behälter**
Stretchdrawn container
Récipient obtenu par emboutissage-étirage

(30) Priorität: 16.08.1990 CH 266890
(43) Veröffentlichungstag der Anmeldung: 11.03.1992
(73) Patentinhaber: Alusuisse Technology & Management AG, 8212 Neuhausen am Rheinfall (CH)
(72) Erfinder: Muggli, Olivier Y., CH-8212 Neuhausen am Rheinfall (CH)

(56) Entgegenhaltungen:
- DE-A- 1 932 886
- DE-A- 2 757 370
- DE-A- 2 920 456
- US-A- 4 587 175

## Beschreibung

Die Erfindung betrifft streckgezogene Behälter aus einem streckziehfähigen Metall-Kunststoff-Verbundlaminat.

Es ist bekannt, streckgezogene Aluminium-Formpackungen für Pharmaprodukte und Lebensmittel z.B. als Durchdrückpackungen, Behältnisse, Untersiegelwannen, Doppelausformungen usw. einzusetzen. Diese sind in der Lage die hohen Schutzanforderungen der Füllgüter gegen das Eindiffundieren von Sauerstoff, Wasserdampf und Licht oder das Ausdiffundieren von z.B. Duftstoffen optimal zu erfüllen, sowie die Benützerfreundlichkeit der Verpackung zu verbessern.

Ausserdem gehören oft Sterilisierbarkeit, die Pasteurisierbarkeit oder die Heissabfülleignung zu den gestellten Anforderungen.

Es ist Stand der Technik, streckgezogene Behälter aus Laminaten herzustellen, die eine mittlere Aluminiumschicht, eine äussere Schicht aus orientiertem Polyamid und eine innere Schicht aus Polyvinylchlorid aufweisen. Aus Gründen des Umweltschutzes ist heute die Verwendung von Polyvinylchlorid einzuschränken. Polyvinylchloridfreie oder -arme Schichten haben den Vorteil, dass, wenn sie nicht stoff-rezykliert sondern energie-rezykliert werden, beim Verbrennen keine oder nur wenig Schadstoffe entstehen. Auch ist es für eine Entsorgung und Rezyklierung von solchen Laminaten vorteilhaft, dass möglichst wenig verschiedene Materialklassen vorhanden sind.

Verbundlaminate für Verpackungen, die kein Polyvinylchlorid enthalten, sind an sich bekannt.

In der EP-A-0 317 818 wird ein Verpackungslaminat für Raucherwaren beschrieben, das Barriereeigenschaften aufweist. Das Material ist jedoch nur zum Einschlagen von beispielsweise Zigaretten vorgesehen und ist deshalb sehr dünn, d.h. mit einer maximalen Dickenbegrenzung von 2,5 mils, entsprechend 63,5 µm, ausgestaltet. Ein derartiger Werkstoff ist für das Streckziehen nicht geeignet.

Die US-Patenschriften 4′085′244 und 4′216′268 beschreiben einen laminierten Verpackungsfilm aus einem äusseren biaxial orientierten Polyamidfilm, einer flexiblen Metallfolie, einem biaxial orientierten Polypropylen und einer inneren Siegelschicht zur Herstellung von Beuteln.

Diese Folie ist aufgrund ihres asymmetrischen Aufbaus mit einer verhältnismässig starken inneren Siegelschicht als Streckziehlaminat wenig geeignet. Im weiteren ist das Rezyklieren durch die Anwendung von Kunststoffen zweier Klassen erschwert.

In der DE-Patentschrift 34 36 412 ist eine ein- oder beidseitig mit einer biaxial orientierten Polyesterfolie kaschiertes Metallblech beschrieben, das zum Ziehen von Dosen geeignet sein soll. Um den sicheren Verbund von Metall mit der Polyesterfolie zu erzielen, muss das Metallblech eine Doppelschicht aus hydratisiertem Chromoxid aufweisen. Ein derartiges Metallblech ist in seiner Herstellung aufwendig und Chromoxidschichten sind z.B. in der Lebensmittelverpackung unerwünscht bzw. können verboten werden.

Keine dieser bisher beschriebenen Folienverbunde oder Laminate kann die zum Streckziehen geforderten optimalen Eigenschaften auf sich vereinigen. Dies betrifft auch die aus Umweltschutzgründen geforderten Eigenschaften, die z.B. die Rezyklierbarkeit von Laminaten resp. der daraus gefertigten Gegenstände, wie Verpackungen, fordern.

Ein geeignetes Verbundlaminat muss das Dehnen der Metallschicht während dem Streckziehprozess unterstützen, so dass Flächendehnungen von 80% und höher ohne Beschädigung, wie Perforierung der Metallschicht erreicht werden können. Der Schutz der Metallschicht bezüglich Beschädigung durch Reissen oder Perforation ist von grosser Bedeutung, da die Metallschicht vornehmlich als Barriere-Schicht gegen das Eindiffundieren von Gasen, wie Sauerstoff, von Wasserdampf und von Licht, sowie gegen das Ausdiffundieren von Duft- und Aromastoffen dient.

Aufgabe vorliegender Erfindung ist es, Behälter aus einem streckziehfähigen Metall-Kunststoff-Verbundlaminat zur Verfügung zu stellen, das die genannten Nachteile nicht aufweist. Erfindungsgemäss wird das gestellte Ziel durch einem streckgezogenen Behälter aus einem streckziehfähigen Laminat erreicht, wobei das Laminat eine Metallschicht und beidseitig der Metallschicht eine Kunststoffschicht aufweist, wobei die Metallschicht eine Dicke x und die Kunststoffschichten je eine Dicke von 0,7 x bis 1,4 x aufweisen und x ein Dickenmass von 30 bis 70 µm darstellt und die Kunststoffschichten Thermoplaste auf Olefin-Basis enthalten oder daraus bestehen.

Die Metallschicht des Laminates kann beispielsweise aus Eisen, Stahl, oder Kupfer sein, bevorzugt ist eine Metallschicht aus Aluminium oder einer Aluminiumlegierung. Zweckmässig ist eine Metallschicht aus Aluminium mit einer Reinheit von 98,6% und höher, bevorzugt von 99,2% und höher und besonders bevorzugt von 99,5% und höher. Weiter zweckmässig sind Aluminiumlegierungen, z.B. des Typs AA 8079 oder AA 8101.

Insbesondere bevorzugt ist als Metallschicht ein weichgeglühtes, feinkörniges und/oder weitgehend texturfreies (isotropes) Aluminium-Dünnband, insbesondere mit wenigstens 5 und besonders bevorzugt 7 Kornlagen über die Dicke des Bandes.

Die Oberfläche der Metallschicht und insbesondere der Aluminiumschicht ist vorzugsweise homogen, ohne Restschmiermittel und mit definierter Oberfläche. Die Aluminiumoberflächen können beispielsweise mit Einbrennlackierungen auf Epoxy- oder Phenolbasis oder mit Konversionsschichten, wie Mischoxid- und/oder Hydratschichten, behandelt sein. Weiter können die Oberflächen durch eine Koronaentladungsbehandlung vorbehandelt sein.

Die Kunststoffschichten enthalten einen Thermoplasten auf Olefin-Basis oder bestehen daraus.

Zweckmässig sind die Thermoplaste auf Olefin-Basis ein Polyethylen, Polypropylen, Poly-(I-buten), Poly-(3-methylbuten), Poly-(4-methylpenten) oder Copolymere davon.

Bevorzugte Beispiele für Thermoplaste auf Olefin-Basis sind Polyolefine, wie Polyethylen und insbesondere Polyethylen hoher Dichte (HDPE, Dichte grösser als 0,944 g/cm³), Polyethylen mittlerer Dichte (MDPE, Dichte 0,926-0,940 g/cm³), lineares Polyethylen mittlerer Dichte (LMDPE, Dichte 0,926-0,940 g/cm³), Polyethylen niedriger Dichte (LDPE, Dichte 0,910-0,925 g/cm³) und lineares Polyethylen niedriger Dichte (LLDPE, Dichte 0,916-0,925 g/cm³), und Polypropylen, wobei Polypropylen ganz besonders bevorzugt ist.

Die Kunststoffschichten können gereckt sein und sind zweckmässig uniaxial und bevorzugt biaxial gereckt. Insbesondere können die Kunststoffschichten uniaxial und bevorzugt biaxial gereckte Thermoplasten auf Olefin-Basis enthalten oder daraus bestehen. Ganz besonders bevorzugt ist uniaxial oder insbesondere biaxial gerecktes Polypropylen.

Das Fliessverhalten der Kunststoffschichten in Form von Folien und insbesondere der biaxial gereckten Polypropylenfolien ist zweckmässig möglichst isotrop.

Im weiterei werden Kunststoffschichten oder Folien bevorzugt deren Fliessverhalten eine hohe Verfestigung zeigt.

Mit hoher Verfestigung wird ausgedrückt, dass mit zunehmender Dehnung der Folie die Spannung in Maschinenrichtung und in transversale Richtung ansteigt.

Ebenfalls bevorzugt ist ein Fliessverhalten der Folien das durch einen positiven Verfestigungsanstieg, zumindest in der Maschinenrichtung oder der transversalen Richtung, gekennzeichnet ist. Der positive Verfestigungsanstieg drückt den Quotienten des Spannungsinkrementes über dem Dehnungsinkrement aus und liegt deshalb bevorzugt über einem Wert von 0, das heisst der Wert ist bevorzugt positiv.

Besonders geeignete Kunststoffschichten weisen einen hohen R-Wert auf, wobei ein R-Wert insbesondere über 1 liegt. Der R-Wert drückt aus, ob das Material bevorzugt aus der Breite oder aus der Dicke der jeweiligen Folie fliesst. Ein R-Wert über 1 bedeutet, dass das Material bevorzugt aus der Breite der Probe fliesst.

Zu den bevorzugten Folien gehören beispielsweise biaxial gereckte Polypropylen-Folien mit einer Zugfestigkeit in beiden Richtungen von über 150 MPa, bevorzugt über 200 MPa.

Die Bruchdehnung bevorzugter Folien liegt z.B. bei über 40% und insbesondere bei über 50%.

Die Spannung im Dehnungsbereich von 5 bis 15% von bevorzugten Folien liegt zweckmässig zwischen 40 und 120 MPa und insbesondere zwischen 50 und 100 MPa.

Die genannte Dicke x stellt das Dickenmass für die Metallschicht dar und das Dickenmass x kann bevorzugt von 40 bis 60 µm betragen.

Die Dicke der Kunststoffschichten beträgt jeweils bevorzugt 0,75 x bis 1,35 x und besonders bevorzugt 0,9 x bis 1,2 x.

Die beidseitig der Metallschicht befindlichen Kunststoffschichten und insbesondere die Thermoplasten auf Olefin-Basis können unabhängig voneinander jeweils ein-oder beidseitig zusätzlich mit einer siegelfähigen Schicht versehen sein. Die Siegelschichten können z.B. coextrudiert werden. Die Coextrusion erfolgt zweckmässig vor dem Reckungsprozess. Die Art der siegelfähigen Schicht ist unkritisch und kann z.B. Polyethylen, Polypropylen oder einem Polypropylen/Polyethylen-Copolymerisat enthalten oder daraus bestehen. Andere geeignete Siegelschichten sind z.B. aus Polyvinylidenchlorid oder aus Acrylaten oder enthalten diese Materialien. Der Dickenbereich für die Siegelschichten liegt beispielsweise bei 1 bis 10 µm und bevorzugt bei 1 bis 5 µm.

Sowohl durch eine einseitige als auch beidseitige Coextrusion der Kunststoffschicht mit beispielsweise einem Polypropylen/Polyethylen-Copolymer erhält man einen beidseitig siegelbaren Verbund.

Die coextrudierte Schicht kann z.B. gegen das Aluminium gerichtet sein. Dies wird beispielsweise bevorzugt, weil so dem Kleber bessere Hafteigenschaften und Haftbedingungen vermittelt werden können.

Demnach ist es zweckmässig, dass die Kunststoffschichten einen Thermoplasten auf Olefin-Basis enthalten oder daraus bestehen und wenigstens einer der Thermoplasten auf Olefin-Basis auf wenigstens einer Seite mit einer Siegelschicht versehen ist. D.h., jede Schicht aus einem Thermoplasten auf Olefin-Basis kann, unabhängig von anderen Schichten, ein- oder beidseitig mit einer siegelfähigen Schicht bedeckt sein.

Die Oberfläche der Kunststoffolien soll zweckmässig mindestens 35 mN/m und bevorzugt mindestens 38 mN/m Oberflächenspannung aufweisen, damit das Auftragen von Kleber auf die Kunststoffoberfläche optimal durchgeführt werden kann.

Durch Korona-Vorbehandlung der Kunststoff-Folien und/oder der Aluminium-Oberflächen können die Oberflächenspannungen und damit auch die Klebeigenschaften gesteuert werden.

Zum Verbinden der Kunststoffolien mit dem Aluminium oder der Kunststoffolien unter sich wird zweckmässig ein Kaschierkleber angewendet. Der Kaschierkleber kann durch Lackkaschierung auf die zu verklebende Oberfläche aufgetragen werden.

Geeignete Kleber sind beispielsweise Vinylchlorid-Copolymerisate, Vinylchlorid-Vinylacetat-Copolymerisate, polymerisierbare Polyester, Vinylpyridin-Polymerisate, Vinylpyridin-Polymerisate in Kombination mit Epoxidharzen, Butadien-Acrylnitril-Methacrylsäure-Copolymerisate, Phenolharze, Kautschukderivate, Acrylharze, Acrylharze mit Phenol bzw. Epoxidharzen bzw. Acrylester-Copolymerisate, oder siliciumorganische Verbindung, wie Organosilane.

Bevorzugt werden die Organosilane. Beispiele dafür sind Alkyltrialkoxysilane mit Aminofunktionsgruppe, Alkyltrialkoxysilane mit Epoxyfunktionsgruppe, Alkyltrialkoxysilane mit Esterfunktionsgruppe, Alkyltrialkoxysilane mit aliphatischer Funktionsgruppe, Alkyltrialkoxysilane mit Glycidoxyfunktionsgruppe, Alkyltrialkoxysilane mit Methacryloxyfunktionsgruppe, sowie Gemische derselben. Beispiele solcher Organosilane sind γ-Aminopropyltriethoxysilan und N-β-(Aminoethyl)-γ-aminopropyltrimethoxysilan, γ-(3,4-Epoxycyclohexyl)-ethyltrimethoxysilan, γ-Glycidoxypropytrimethoxysilan, und γ-Methacryloxypropyltrimethoxysilan. Diese Verbindungen sind in der Fachwelt an sich bekannt.

Weitere geeignete Haftvermittler sind Kleber wie beispielsweise Nitrilkautschuk-Phenolharze, Epoxide, Acrylnitril-Butadienkautschuk, urethanmodifizierte Acryle, Polyester-co-Polyamide, Heissschmelzpolyester, mit Heissschmelzpolyester vernetzte Polyisocyanate, Polyisobutylenmodifizierte Styrol-Butadienkautschuke, Polyurethane, Ethylen-Acrylsäure-Mischpolymere und Ethylenvinylacetat-Mischpolymere.

Besonders bevorzugt sind die Polyurethane. Die Kleber können je nach Typ mit oder ohne Lösungsmittel oder aus wässriger Lösung angewendet werden.

In der Regel wird eine Schichtdicke des Klebers von 1 bis 12 µm und bevorzugt von 1,5 bis 9 µm eingehalten. Anstelle der Schichtdicke lässt sich die Menge des Klebers, insbesondere zwischen der Metallschicht und den beidseitig der Metallschicht unmittelbar angeordneten Kunststoff-Schichten durch die Menge des Kaschierklebers ausdrücken. Beispielsweise liegt die Menge bei 1,0 bis 14 g/m², zweckmässig bei 1,5 bis 9 g/m² und bevorzugt bei 1,5 bis 6 g/m². Die Menge ist ohne allfälliges Lösungsmittel angegeben. Die Kunststoff-Folien können auch gegenseitig oder auf die Aluminiumoberfläche wärmekaschiert werden.

Typische Schichtaufbauten für Metall-Laminate der Behälter nach vorliegender Erfindung enthalten beispielsweise
a) eine mittlere Schicht aus Aluminium in einer Dicke von beispielsweise 30 bis 70 µm und bevorzugt von 40 bis 60 µm, und beidseitig der Aluminiumschicht
b) und b') je eine Schicht eines Kaschierklebers in einer Dicke von 1,5 bis 9 µm
c) und c') je eine Schicht eines Polyethylen-Polypropylen-Copolymerisates in einer Dicke von beispielsweise 1 bis 10 µm und bevorzugt 1 bis 5 µm,
d) und d') je eine Schicht einer biaxial orientierten Polypropylenfolie beispielsweise einer Dicke von 20 bis 90 µm, bevorzugt von 35 bis 70 µm und insbesondere von 40 bis 50 µm, und
e) und e') je eine Schicht eines Polyethylen-Polypropylen-Copolymerisates in einer Dicke von beispielsweise 1 bis 10 µm und bevorzugt von 1 bis 5 µm.

In anderen Schichtaufbauten nach vorliegender Erfindung können die Schichten c) und/oder c') und/oder die Schichten e) und/oder e') weggelassen werden. Solche zweckmässigen Metall-Laminate enthalten dann beispielsweise nur noch die Schicht a), die Schichten b) und b') und d) und d') oder die Schicht a), die Schichten b und b'), d) und d') und die Schichten e) und e') oder die Schicht a), die Schichten b) und b'), die Schichten c) und c') und die Schichten d) und d').

Aus den erfindungsgemässen Metall-Kunststoff-Laminaten hergestellte Behälter müssen in vielen Fällen hitzebeständig sein. Beispielsweise muss der Behälter einem Sterilisierungs- oder Pasteurisierungsprozess standhalten oder der Behälter stellt gleichzeitig ein Kochgefäss dar und muss dem Aufwärm- und/oder Garprozess des Inhaltes widerstehen. Deshalb sind die einzelnen Bestandteile des Laminates sowohl für sich, als auch in gegenseitigem Verbund zweckmässig hitzebeständig. Diese Eigenschaft trifft insbesondere für die einzelnen Kunststoffolien, allfällige Coextrudate oder Laminate und die verwendeten Kleber und Haftvermittler zu.

Mit Durchmesser ist bei Behältern nicht runden Grundrisses sinngemäss die Länge der Diagonale oder die durchschnittlichen Längen der Diagonalen zu verstehen.

Die Streckverfahren zur Herstellung der erfindungsgemässen Behälter aus den streckziehfähigen Metall-Kunststoff-Laminaten sind an sich bekannt. In der Regel wird ein Abschnitt des Laminates kalt über eine Matrize gelegt. Am Rande der Matrize, mit Hilfe eines Niederhalters, wird das Laminat festgehalten und ein Stempel senkt sich unter Verformung des Laminates in die Matrize.

Das Laminat wird, da aus dem Randbereich kein Material nachfliessen kann, gestreckt. Dadurch nimmt die Dicke des Laminates ab.

Der beschriebene Verbundaufbau des Laminates hat eine optimale Streckzieheignung mit kontrollierten mechanischen Eigenschaften, die das Dehnen der Aluminium-Schicht während dem Streckziehprozess unterstützen, so dass Flächendehnungen von 80% und höher ohne Beschädigung der Metallschicht erreicht werden können.

Im uniaxialen Spannungszustand können Dehnungen ohne Beschädigung der Aluminium-Schicht bis 40% und höher erreicht werden.

Schliesslich ist das streckziehfähige Metall-Kunststoff-Laminat in gestrecktem oder ungestrecktem Zustand hitzesterilisierbar, insbesonder bei Standart-Bedingungen von 121°C während 30 Minuten.

Die vorliegende Erfindung umfasst auch erfindungsgemässe Behälter aus streckziehfähigen Laminat, zweckmässig mit einem Verhältnis von Höhe zu Durchmesser von 1 zu 3,7 bis 1 zu 3,2, insbesondere bei flachem Behälterboden.

Die erfindungsgemässen Behälter, hergestellt aus streckziehfähigen Metall-Kunststoff-Verbund hergestellt werden, sind beispielsweise zur Aufnahme von Nahrungsmitteln für Mensch oder Tier geeignet. Andere Verwendungszwecke sind z.B. Behälter für pharmazeutische Erzeugnisse, wie Dragees, Tabletten, Pulver etc., und kosmetische Produkte, wie parfümierte Servietten, Färbemittel etc.

### Beispiel

Auf ein Aluminium-Dünnband mit einer Stärke von 45 µm und einer sauberen Oberfläche ohne Vorbehandlung wird ein Polyurethan-Kaschierkleber mit einem Auftragsgewicht von 5,5 bis 6,5 g/m² aufgebracht.

Das Lösungsmittel vom Kaschierkleber wird im Trockenkanal verdampft und anschliessend im Kaschierspalt unter Druck mit einer beidseitig aus einem Polypropylen-Polyethylen-Copolymer coextrudierten biaxial gereckten oPP-Folie mit einer Stärke von 50 µm kaschiert und aufgewickelt oder gleich weiterverarbeitet.

Die Weiterverarbeitung erfolgt identisch wie vorhin, nur wird nun die andere Seite des Aluminium-Dünnbandes unter gleichen Bedingungen kaschiert.

Das Fertigprodukt wird bei 40 bis 50° einige Tage ausgehärtet und anschliessend getestet:

Die Verbundhaftung beträgt ca. 10N/15 mm Streifen.

Die Umformeigenschaften können wie folgt umrissen werden:

Durch Streckziehen mit einem flachen Stempel von Durchmesser 27 mm und einer Matrize von Durchmesser 30 mm kann eine Bruchtiefe von über 9 mm erreicht werden.

Durch Streckziehen mit einem halbkugeligen Stempel mit Radius 13,5 mm und einer Matrize von Durchmesser 30 mm, kann eine Bruchtiefe von über 13 mm erreicht werden.

Ab einer Temperatur von 140°C kann eine ausreichende thermische Siegelung gegen eine identische Siegelschicht durchgeführt werden.

Die Sterilisation bei einer Temperatur von 121°C während 30 min nach der Umformung und eine Auslagerung während drei Monaten bei 45°C führten zu keinen Delaminationen der Kunststoff-Schichten.

## Patentansprüche

1. Streckgezogene Behälter aus einem streckziehfähigen Metall-Kunstoff-Verbundlaminat,
dadurch gekennzeichnet, dass
das Laminat eine Metallschicht und beidseitig der Metallschicht eine Kunststoffschicht aufweist, wobei die Metallschicht eine Dicke x und die Kunststoffschichten je eine Dicke von 0,7 x bis 1,4 x aufweisen und x ein Dickenmass von 30 bis 70 µm darstellt und die Kunststoffschichten Thermoplaste auf Olefin-Basis enthalten oder daraus bestehen.

2. Streckgezogene Behälter nach Anspruch 1, dadurch gekennzeichnet, dass die Metallschicht des Laminats eine Aluminiumschicht ist.

3. Streckgezogene Behälter nach Anspruch 1, dadurch gekennzeichnet, dass die Kunststoffschichten des Laminates Thermoplaste auf Olefin-Basis ein Polyethylen, Polypropylen, Poly-(1-buten), Poly-(3-methylbuten), Poly-(4-methylpenten) oder Copolymere davon darstellen.

4. Streckgezogene Behälter nach Anspruch 1, dadurch gekennzeichnet, dass die Thermoplaste auf Olefin-Basis biaxial gereckt sind.

5. Streckgezogene Behälter nach Anspruch 1, dadurch gekennzeichnet, dass wenigstens einer der Thermoplasten auf Olefin-Basis auf wenigstens einer Seite mit einer Siegelchicht versehen ist.

6. Streckgezogene Behälter nach Anspruch 1, dadurch gekennzeichnet, dass x ein Dickenmass von 40 bis 60 µm darstellt.

7. Streckgezogene Behälter nach Anspruch 1, dadurch gekennzeichnet, dass die Dicke der Kunststoffschichten je 0,75 x bis 1,35 x beträgt.

8. Streckgezogene Behälter nach Anspruch 1, dadurch gekennzeichnet, dass die Dicke der Kunststoffschichten je 0,9 x bis 1,2 x beträgt.

9. Streckgezogene Behälter nach Anspruch 1, dadurch gekennzeichnet, dass der Behälter ein Verhältnis von Höhe zu Durchmesser von 1 zu 3,7 bis 1 zu 3,2 aufweist.

## Claims

1. Stretch-formed containers consisting of a stretch-formable metal-plastic laminate, characterised in that the laminate comprises a metal layer and a plastic layer on either side of the metal layer, the metal layer having a thickness x and the plastic layers each having a thickness of 0.7 x to 1.4 x and x representing a thickness of 30 to 70 µm and the plastic layers containing or consisting of olefin-based thermoplastics.

2. Stretch-formed containers according to claim 1, characterised in that the metal layer of the laminate is an aluminium layer.

3. Stretch-formed containers according to claim 1, characterised in that the olefin-based thermoplastics of the plastic layers of the laminate are a polyethylene, polypropylene, poly-(1-butene), poly-(3-methyl butene), poly-(4-methyl pentene) or copolymers thereof.

4. Stretch-formed containers according to claim 1, characterised in that the olefin-based thermoplastics are biaxially oriented.

5. Stretch-formed containers according to claim 1, characterised in that at least one of the olefin-based thermoplastics is provided on at least one side with a sealing layer.

6. Stretch-formed containers according to claim 1, characterised in that x represents a thickness of 40 to 60 µm.

7. Stretch-formed containers according to claim 1, characterised in that the thickness of the plastic layers is 0.75 x to 1.35 x.

8. Stretch-formed containers according to claim 1, characterised in that the thickness of the plastic layers is 0.9 x to 1.2 x.

9. Stretch-formed containers according to claim 1, characterised in that the container has a height to diameter ratio of 1 to 3.7 to 1 to 3.2.

## Revendications

1. Récipients obtenus par emboutissage-étirage à partir d'un lamifié composite métal-plastique apte à subir un emboutissage-étirage, caractérisés en ce que le lamifié présente une couche métallique et, de part et d'autre de la couche métallique, une couche de matière plastique, la couche métallique présentant une épaisseur x et les couches de matière plastique présentant chacune une épaisseur de 0,7 x à 1,4 x, et x représentant une mesure d'épaisseur de 30 à 70 µm, les couches de matière plastique contenant des thermoplastiques à base d'oléfines ou s'en composant.

2. Récipients obtenus par emboutissage-étirage selon la revendication 1, caractérisés en ce que la couche métallique du lamifié est une couche d'aluminium.

3. Récipients obtenus par emboutissage-étirage selon la revendication 1, caractérisés en ce que les couches de matière plastique du lamifié contiennent ou se composent de thermoplastiques à base d'oléfines représentés par un polyéthylène, un polypropylène, le poly-(1-butène), le poly-(3-méthylbutène), le poly-(4-méthylpentène) ou des copolymères de ces derniers.

4. Récipients obtenus par emboutissage-étirage selon la revendication 1, caractérisés en ce que les thermoplastiques à base d'oléfines sont étirés biaxialement.

5. Récipients obtenus par emboutissage-étirage selon la revendication 1, caractérisés en ce qu'au moins l'un des thermoplastiques à base d'oléfines est pourvu d'une couche de scellement, au moins d'un côté.

6. Récipients obtenus par emboutissage-étirage selon la revendication 1, caractérisés en ce que x représente une mesure d'épaisseur de 40 à 60 µm.

7. Récipients obtenus par emboutissage-étirage selon la revendication 1, caractérisés en ce que l'épaisseur des couches de matière plastique est chaque fois de 0,75 x à 1,35 x.

8. Récipients obtenus par emboutissage-étirage selon la revendication 1, caractérisés en ce que l'épaisseur des couches de matière plastique est chaque fois de 0,9 x à 1,2 x.

9. Récipients obtenus par emboutissage-étirage selon la revendication 1, caractérisés en ce que les récipients présentent un rapport de hauteur à diamètre de 1 à 3,7 à 1 à 3,2.
